# EUROPÄISCHE PATENTANMELDUNG

(11) **EP 1 006 453 A2**
(43) Veröffentlichungstag der Anmeldung: **07.06.2000**
(21) Anmeldenummer: 99122812.3
(22) Anmeldetag: 17.11.1999
(51) Int. Cl.: G06F 17/28, G06F 17/22

(54) **Verfahren zur Konvertierung von Daten**

(30) Priorität: 30.11.1998 DE 19855137
(71) Anmelder: HONEYWELL AG, D-63067 Offenbach am Main (DE)
(72) Erfinder: Ratzmann, Hardy, 71083 Herrenberg (DE)
(74) Vertreter: Sturm, Christoph

(57) **Zusammenfassung**

Verfahren zur Konvertierung von Daten einer Ausgangs-Datenmenge in eine End-Datenmenge, insbesondere Verfahren zur Übersetzung von Texten.

Mit Hilfe des erfindungsgemäßen Verfahrens zur Konvertierung von Daten ist es möglich, einmal gemachte Konvertierungen bzw. Übersetzungen für nachfolgende Konvertierungen bzw. Übersetzungen zu nutzen. Abhängig vom Kontext der zu konvertierenden Daten werden automatisch die passenden Konvertierungen bzw. Übersetzungen ausgewählt.

## Beschreibung

Die Erfindung betrifft ein Verfahren zur Konvertierung von Daten gemäß dem Oberbegriff des Anspruchs 1.

Die Konvertierung von Daten einer Ausgangs-Datenmenge in eine End-Datenmenge erfolgt zum Beispiel bei der Übersetzung von Texten. Bei der Konvertierung der Daten von der Ausgangs-Datenmenge in die End-Datenmenge ist es bislang erforderlich alle Daten separat zu konvertieren, und zwar auch dann, wenn bereits zuvor eine ältere Version bzw. Vorversion der Ausgangs-Datenmenge konvertiert wurde. Dies ist von großem Nachteil, da in der Regel in einer neuen Version einer Ausgangs-Datenmenge viele Daten der älteren Version unverändert bleiben und somit bei der Konvertierung der Daten der neuen Ausgangs-Datenmenge Konvertierungsschritte, die bereits für die ältere Version der Ausgangs-Datenmenge durchgeführt wurden, wiederholt werden müssen. Dies macht die bislang bekannten Verfahren zur Konvertierung von Daten, insbesondere zur Übersetzung von Texten, uneffizient.

Hiervon ausgehend liegt der vorliegenden Erfindung das Problem zu Grunde, ein Verfahren zur Konvertierung von Daten zu schaffen, welches effektiver arbeitet.

Dieses Problem wird durch ein Verfahren zur Konvertierung von Daten mit den Maßnahmen des Anspruchs 1 gelöst.

Dadurch, daß zur Konvertierung der Daten der Ausgangs-Datenmenge in die End-Datenmenge auf das Ergebnis einer bereits erfolgten Konvertierung einer Vorversion bzw. älteren Version der Ausgangs-Datenmenge in eine Vorversion der End-Datenmenge zurückgegriffen wird, ergibt sich ein effektives Konvertierungsverfahren.

Weitere vorteilhafte Ausgestaltungen der Erfindung ergeben sich aus den Unteransprüchen und der Beschreibung. Nachfolgend wird ein bevorzugtes Ausführungsbeispiel der Erfindung anhand der Zeichnung näher erläutert. In der Zeichnung zeigt:
- Fig. 1: ein Signalflußdiagramm zur Verdeutlichung der erfindungsgemäßen Verfahrens, und
- Fig. 2: ein Signalflußdiagramm eines Unterprozesses des Verfahrens gemäß Fig. 1.

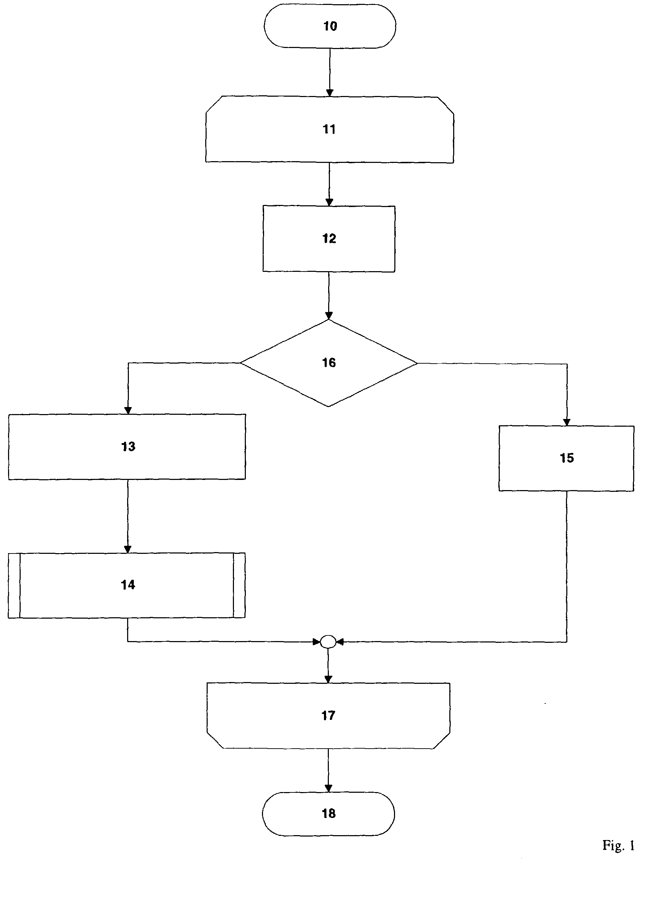

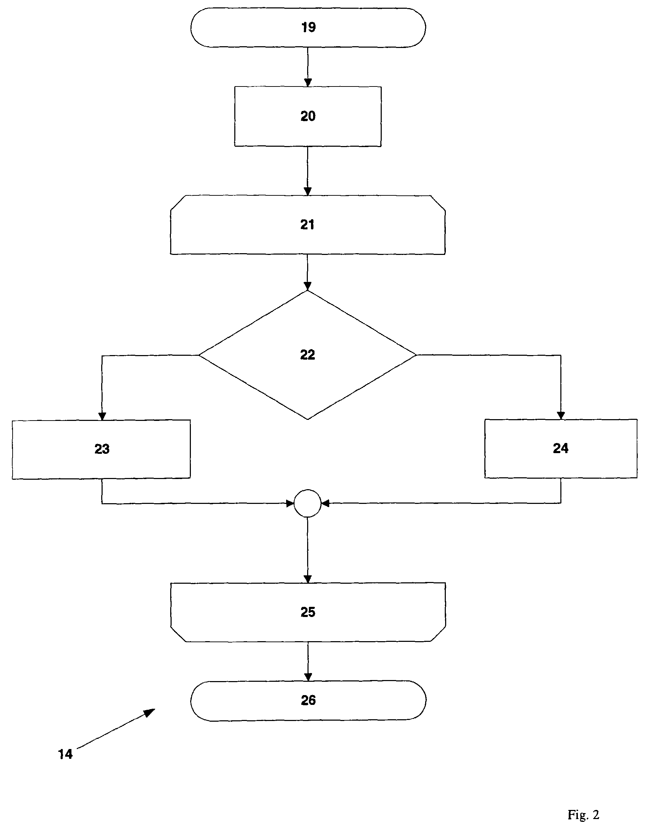

Das in der Zeichnung durch die Signalflußdiagramme gemäß Figuren 1 und 2 verdeutlichte Verfahren dient der Konvertierung von Daten. Die detaillierte Beschreibung des Verfahrens soll anhand der bevorzugten Verwendung des Verfahrens erfolgen, nämlich bei der Übersetzung von Texten. Bei dem Beispiel der Übersetzung von Texten handelt es sich bei einer zu konvertierenden Ausgangs-Datenmenge um einen Ausgangs-Text, z.B. in deutscher Sprache, während es sich bei der End-Datenmenge um einen End-Text in z.B. englischer Sprache handelt. Bei den zu konvertierenden Daten der Ausgangs-Datenmenge handelt es sich um Worte oder um Gruppen von Wörtern, sogenannte Redewendungen oder gesamte Sätze.

Erfindungsgemäß wird bei dem Verfahren zur Konvertierung von Daten einer Ausgangs-Datenmenge in eine Enddaten-Menge so vorgegangen, daß bei der Konvertierung auf das Ergebnis einer zuvor erfolgten Konvertierung einer älteren Version der Ausgangs-Datenmenge zurückgegriffen wird. Für den Anwendungsfall der Übersetzung von Texten bedeutet dies, daß bei der Übersetzung eines Textes von z.B. deutscher Sprache in z.B. englische Sprache auf das Ergebnis einer zuvor erfolgten Übersetzung einer älteren Version des Textes zurückgegriffen wird. Hierbei werden alle Daten, also Worte sowie Gruppen von Wörtern, die nicht nur im aktuell zu übersetzenden Text, sondern auch im bereits übersetzten Text der älteren Version enthalten sind, identisch zur Konvertierung des Textes der neueren Version benutzt. Dies sorgt für eine immense Zeitersparnis.

Figur 1 zeigt den prinzipiellen Ablauf des automatisch ablaufenden Konvertierungs- bzw. Übersetzungsverfahrens. Nach einem Startschritt 10 wird aus der zu konvertierenden Ausgangs-Datenmenge bzw. aus dem zu übersetzenden Text ein erstes Datum bzw. ein erstes Wort oder eine Gruppe von Wörtern ausgewählt. Dieser Auswahlschritt ist in Figur 1 durch den Verfahrensschritt 11 dargestellt. Im Anschluß hieran wird untersucht, ob das ausgewählte, aktuell zu konvertierende Datum bzw. aktuell zu übersetzende Wort bereits in einer zuvor konvertierten Vorversion der Ausgangs-Datenmenge enthalten ist und somit konvertiert bzw. übersetzt wurde. Bei der zuvor übersetzten, Vorversion der Ausgangs-Datenmenge handelt es sich um eine ältere Version der aktuell zu konvertierenden bzw. zu übersetzenden Ausgangs-Datenmenge. Mit anderen Worten wird demnach bei der Übersetzung von Texten eine ältere Version dahin gehend durchsucht, ob ein aktuell zu übersetzendes Datum der neuen zu übersetzenden Version bereits in der alten Version enthalten ist und konvertiert bzw. übersetzt wurde. Dieser Verfahrensschritt ist in Figur 1 als Suchschritt 12 dargestellt.

Ist das aktuell zu konvertierende bzw. zu übersetzende Datum der aktuell zu übersetzenden Ausgangs-Datenmenge in der zuvor übersetzten Vorversion der Ausgangs-Datenmenge enthalten, so werden für das aktuell zu konvertierende bzw. zu übersetzende Datum der Ausgangs-Datenmenge alle bekannten Konvertierungen bzw. Übersetzungen des aktuell zu konvertierenden Datums aus der Vorversion der End-Datenmenge übernommen. In Figur 1 ist das Übernehmen der bekannten Konvertierungen bzw. Übersetzungen für das aktuell zu konvertierende Datum der Ausgangs-Datenmenge als Übernahmeschritt 13 dargestellt.

Im unmittelbaren Anschluß an diesen Übernahmeschritt 13 wird aus allen bekannten Konvertierungen bzw. Übersetzungen für das aktuell zu konvertierende Datum die passende Konvertierung bzw. Übersetzung ausgewählt. Die passende Konvertierung bzw. Übersetzung hängt vom Kontext (der Textumgebung) des aktuell zu konvertierenden bzw. zu übersetzenden Datums ab. Es kann nämlich sein, daß abhängig vom Kontext ein aktuell zu übersetzendes Datum auf unterschiedlicher Art und Weise konvertiert bzw. übersetzt werden muß. Diese kontextsensitive Konvertierung bzw. Übersetzung ist in Figur 1 als Überarbeitungsschritt 14 dargestellt, der weiter unten in größerem Detail in Verbindung mit Figur 2 dargestellt wird.

Bleibt hingegen der Suchschritt 12 ergebnislos, d.h. wird das aktuell zu übersetzende bzw. zu konvertierende Datum der Ausgangs-Datenmenge nicht in der zuvor konvertierten Vorversion der Ausgangs-Datenmenge gefunden, so bleibt das aktuell zu konvertierende Datum der Ausgangs-Datenmenge zunächst unkonvertiert bzw. unübersetzt. Dieses Auslassen der Konvertierung ist in Figur 1 als Auslassungsschritt 15 dargestellt.

Das automatische Verzweigen des Konvertierungsverfahrens nach dem Suchschritt 12 ist in Figur 1 durch einen Verzweigungsschritt 16 verdeutlicht.

Nach erfolgtem Überarbeitungsschritt 14 oder erfolgtem Auslassungsschritt 15 wird als aktuell zu übersetzendes bzw. zu konvertierendes Datum ein nächstes Datum, also ein nächstes Wort bzw. eine nächste Gruppe von Wörtern, der aktuell zu übersetzenden Ausgangs-Datenmenge ausgewählt. Dieser Verfahrensschritt ist in Figur 1 als Auswahlschritt 17 dargestellt. Im Anschluß an den Auswahlschritt 17 werden, wie bereits oben beschrieben, die Verfahrensschritte 12, 16, 13, 14 oder 12, 16, 15 ausgeführt, je nachdem, ob das aktuell zu konvertierende bzw. zu übersetzende Datum der Ausgangs-Datenmenge bereits in der Vorversion der Ausgangs-Datenmenge enthalten ist. Die obige Schleife wird solange durchlaufen, bis alle Daten der aktuell zu konvertierenden bzw. zu übersetzenden Ausgangs-Datenmenge abgearbeitet sind. Danach wird das Verfahren beendet, was in Figur 1 durch einen Stoppschritt 18 verdeutlicht ist.

Wie bereits oben geschildert, werden, nachdem ein aktuell zu konvertierendes bzw. zu übersetzendes Datum der aktuell zu konvertierenden bzw. zu übersetzenden Ausgangs-Datenmenge in der zuvor konvertierten Vorversion der Ausgangs-Datenmenge gefunden wurde, alle bekannten Konvertierungen bzw. Übersetzungen für das aktuell zu übersetzende Datum aus der Vorversion der End-Datenmengen übernommen. Hierdurch ist sichergestellt, daß für das aktuell zu konvertierende bzw. zu übersetzende Datum der Ausgangs-Datenmenge alle aus der Vorversion der End-Datenmenge bekannten Konvertierungen zur Verfügung stehen. Demnach kann auf die Konvertierungen bzw. Übersetzungen einer zuvor konvertierten, älteren Version der Ausgangs-Datenmenge zurückgegriffen werden.

Aus der Menge der für ein aktuell zu konvertierendes Datum der Ausgangs-Datenmenge bekannten Übersetzungen wird im Überarbeitungsschritt 14 die zum Kontext des Datums passende Konvertierung bzw. Übersetzung ausgewählt. Der Überarbeitungsschritt 14 gewährleistet demnach eine kontextsensitive Konvertierung, die nachfolgend in Verbindung mit Figur 2 näher beschrieben wird.

Zum besseren Verständnis des kontextsensitiven Überarbeitungsschritts 14 sei angemerkt, daß es für jedes zu konvertierende bzw. zu übersetzende Datum mehrere Konvertierungsmöglichkeiten bzw. Übersetzungsmöglichkeiten geben kann. Die richtige bzw. günstige Konvertierung hängt dabei vom Kontext ab, indem sich das aktuell zu konvertierende Datum befindet. Bei allen aus einer bereits konvertierten Vorversion der Ausgangs-Datenmenge bekannten Konvertierungen bzw. Übersetzungen für das aktuell zu konvertierende Datum der Ausgangs-Datenmenge unterscheidet man zwischen einer Standardkonvertierung und einer oder mehrerer Ausnahmekonvertierungen. Bei der Standardkonvertierung handelt es sich um die Konvertierung bzw. Übersetzung für ein aktuell zu konvertierendes Datum, die in der Regel die richtige bzw. günstige Konvertierung oder Übersetzung ist. Abhängig vom Kontext des aktuell zu konvertierenden bzw. zu übersetzenden Datums kann jedoch die Standardübersetzung ungünstig sein. Abhängig vom Kontext können demnach Ausnahmeübersetzungen der Standardübersetzung vorgezogen werden. Mit dem Überarbeitungsschritt 14 wird demnach automatisch sichergestellt, daß bei der Konvertierung eines aktuell zu konvertierenden bzw. zu übersetzenden Datums der Ausgangs-Datenmenge in Übereinstimmung mit der Konvertierung der zuvor übersetzten Vorversion der Ausgangs-Datenmenge abhängig vom Kontext für jedes bereits in der Vorversion der Ausgangs-Datenmenge gefundene Datum die Standardkonvertierung oder eine spezielle Ausnahmekonvertierung übernommen wird.

Hierzu wird nach einem Startschritt 19 zunächst für das aktuell zu konvertierende Datum der Ausgangs-Datenmenge die Standardkonvertierung bzw. Standardübersetzung aus der Vorversion der End-Datenmenge übernommen. Hierdurch ist sichergestellt, daß für jedes aktuell zu konvertierende Datum die Standardkonvertierung verwendet wird, falls keine spezifische Ausnahmekonvertierung gefunden werden sollte. Dies ist in Figur 2 als Standard-Konvertierungsschritt 20 dargestellt.

Im Anschluß an den Standard-Konvertierungsschritt 20 wird festgestellt, ob für das aktuell zu konvertierende bzw. zu übersetzende Datum eine Ausnahmekonvertierung mit zugeordnetem Kontext bekannt ist. Sollte eine derartige Ausnabmeübersetzung mit zugehörigem Kontext bekannt sein, so wird diese zur weiteren Bearbeitung ausgewählt. Figur 2 zeigt dies als Auswahlschritt 21. Im Anschluß an den Auswahlschritt 21 wird überprüft, ob der der Ausnahmekonvertierung bzw. Ausnahmeübersetzung zugeordnete Kontext dem Kontext des aktuell zu konvertierenden bzw. zu übersetzenden Datums der Ausgangs-Datenmenge entspricht. Demnach wird verglichen, ob der Kontext des aktuell zu konvertierenden Datums der Ausgangs-Datenmenge bereits in der älteren Version der ersten Ausgangs-Datenmenge enthalten ist. Kommt dieser Überprüfungsschritt 22 zu einem positiven Ergebnis, so wird die im Standard-Konvertierungsschritt 20 ausgewählte Standard-Konvertierung bzw. Standardübersetzung durch die aktuelle Ausnahmekonvertierung bzw. Ausnahmeübersetzung ersetzt. Figur 2 verdeutlicht dies im Ausnahme-Konvertierungsschritt 23. Kommt hingegen der Überprüfungsschritt 22 zu einem negativen Ergebnis, so wird die durch den Standard-Konvertierungsschritt 20 vorbestimmte Standardkonvertierung bzw. Standardübersetzung beibehalten. Figur 2 verdeutlicht dies im Ausnahme-Auslassungsschritt 24.

Im Anschluß an den Ausnahme-Konvertierungsschritt oder Ausnahme-Auslassungsschritt wird, falls vorhanden, eine weitere Ausnahmekonvertierung mit zugeordnetem Kontext für das aktuell zu konvertierende bzw. zu übersetzende Datum ausgewählt. Dies zeigt Figur 2 im Auswahlschritt 25. Die oben beschriebenen Verfahrensschritte 22, 23 oder 22, 24 werden dann solange wiederholt, bis die letzte bekannte Ausnahmekonvertierung bzw. Ausnahmeübersetzung auf das aktuell zu konvertierende bzw. zu übersetzende Datum angewendet wurde. Im Anschluß daran wird der Überarbeitungsschritt 14 durch den Stopp-Schritt 26 beendet und automatisch auf die Prozedur gemäß Fig. 1 umgeschaltet.

Mit Hilfe des oben beschriebenen, erfindungsgemäßen Verfahrens ist es demnach möglich, einmal durchgeführte Konvertierungen bzw. Übersetzungen automatisch wiederzuverwenden. Das erfindungsgemäße Verfahren bildet automatisch eine kontextbezogene Überlagerung bekannter Konvertierungen bzw. Übersetzungen mit zu konvertierenden bzw. zu übersetzenden Daten. Der durch das erfindungsgemäße Verfahren erzielte Zeitgewinn bei der Konvertierung von Daten gegenüber bekannten Konvertierungsverfahren ist enorm. Es müssen nämlich lediglich nur noch die Daten neu konvertiert bzw. übersetzt werden, die in einer Vorgängerversion der zu konvertierenden Ausgangs-Datenmenge nicht enthalten waren. Eine einmal durchgeführte Konvertierung bzw. Übersetzung ist demnach bei der Konvertierung bzw. Übersetzung von Folgeversionen verfügbar.

Die nicht in der Vorversion der Ausgangs-Datenmenge enthaltenen Daten und damit gemäß dem Auslassungsschritt 15 nicht konvertierten Daten werden im Anschluß an das obige erfindungsgemäße Verfahren konvertiert. Das kann auf übliche Art und Weise erfolgen.

### Bezugszeichenliste:

- 10: Startschritt
- 11: Auswahlschritt
- 12: Suchschritt
- 13: Übernahmeschritt
- 14: Überarbeitungsschritt
- 15: Auslassungsschritt
- 16: Verzweigungsschritt
- 17: Auswahlschritt
- 18: Stoppschritt
- 19: Startschritt
- 20: Standard-Konvertierungsschritt
- 21: Auswahlschritt
- 22: Überprüfungsschritt
- 23: Ausnahme-Konvertierungsschritt
- 24: Ausnahme-Auslassungsschritt
- 25: Auswahlschritt
- 26: Stoppschritt

## Patentansprüche

1. Verfahren zur Konvertierung von Daten einer Ausgangs-Datenmenge in eine End-Datenmenge, **dadurch gekennzeichnet, daß** zur Konvertierung der Daten der Ausgangs-Datenmenge in die End-Datenmenge auf das Ergebnis einer zuvor erfolgten Konvertierung einer Vorversion der Ausgangs-Datenmenge in eine Vorversion der End-Datenmenge zurückgegriffen wird.

2. Verfahren nach Anspruch 1, **dadurch gekennzeichnet, daß** zur Konvertierung eines Datums der Ausgangs-Datenmenge das zu konvertierende Datum in der Vorversion der Ausgangs-Datenmenge gesucht wird.

3. Verfahren nach Anspruch 2, **dadurch gekennzeichnet, daß** bei einem erfolgreichen Suchschritt für das zu konvertierende Datum der Ausgangs-Datenmenge alle Konverierungen aus der Vorversion der End-Datenmenge übernommen werden.

4. Verfahren nach Anspruch 3, **dadurch gekennzeichnet, daß** im Anschluß hieran aus allen für das Datum zur Verfügung stehenden Konverierungen der Vorversion der End-Datenmenge die Konvertierung für die End-Datenmenge ausgewählt wird, die zum Kontext des Datums innerhalb der Ausgangs-Datenmenge paßt.

5. Verfahren nach einem oder mehreren der Ansprüche 2 bis 4, **dadurch gekennzeichnet, daß** bei einem erfolglosen Suchschritt die Konvertierung des zu konvertierenden Datums der Ausgangs-Datenmenge zurückgestellt wird.

6. Verwendung des Verfahrens nach einem oder mehreren der Ansprüche 1 bis 5 zur Übersetzung von Texten.
